# EUROPÄISCHE PATENTSCHRIFT

(11) **EP 0 828 960 B1**
(45) Veröffentlichungstag und Bekanntmachung des Hinweises auf die Patenterteilung: **25.02.2004**
(21) Anmeldenummer: 95932732.1
(22) Anmeldetag: 13.09.1995
(51) Int. Cl.: F16K 31/04, F16K 1/38, D03D 47/30

(54) **Drosselventil für Druckluft und Verfahren zum Eichen des Drosselventils**
Throttle valve for compressed air and method of calibrating the valve
Soupape d'étranglement pour air comprimé et méthode pour le calibrage de la soupape

(30) Priorität: 16.09.1994 BE 9400835; 04.05.1995 BE 9500404
(43) Veröffentlichungstag der Anmeldung: 18.03.1998
(60) Teilanmeldung: 03017908.9
(73) Patentinhaber: Picanol N.V., 8900 Ieper (BE)
(72) Erfinder: MARKEY, Hugo, B-8920 Langemark (BE); PEETERS, Jozef, B-8900 Ieper (BE); LEWYLLIE, Dirk, B-8940 Wervik (BE)
(74) Vertreter: Patentanwälte Ruff, Wilhelm, Beier, Dauster & Partner
(86) Internationale Anmeldenummer: PCT/EP1995/003598
(87) Internationale Veröffentlichungsnummer: WO 1996/008668

(56) Entgegenhaltungen:
- EP-A- 0 623 989
- DE-U- 8 909 351
- US-A- 5 060 910
- PATENT ABSTRACTS OF JAPAN vol. 8 no. 182 (M-319) [1619] ,22.August 1984 & JP,A,59 073679 (MATSUSHITA DENKI SANGYO K.K.) 25.April 1984,

## Beschreibung

Die Erfindung betrifft ein Drosselventil für Druckluft odgl. nach dem Oberbegriff von Patentanspruch 1 und ein Verfahren nach dem Oberbegriff des Anspruches 10 zum Eichen des Drosselventils.

Es sind elektromagnetisch angetriebene Drosselventile bekannt, die einen Anker aufweisen, der an einem Ende mit einem Kolben versehen ist, der mit einem stationären Element einen Drosselspalt bildet. Der Anker mit dem Kolben ist mittels einer mit elektrischem Strom versorgten Spule gegen die Kraft einer Feder verstellbar. In der Regel belastet die Feder den Anker in Richtung zu der Schließstellung. Die Position des Kolbens wird dadurch verändert, dass der durch die Spule fließende Strom verändert wird. Der Kolben nimmt dann eine Position ein, in der die magnetische Kraft und die Federkraft im Gleichgewicht sind.

Bei derartigen Drosselventilen ist die Position des Kolbens und damit die tatsächlich eingestellte Größe des Drosselspaltes von der Toleranz der Federkonstanten und den Toleranzen des magnetischen Antriebes abhängig. Meistens ist auch eine relativ aufwendige Steuerung für die Zufuhr des elektrischen Stroms erforderlich, um unabhängig von der Spulentemperatur die Spule mit einem konstanten Strom zu beaufschlagen, um eine konstante Kraft auf den Anker auszuüben.

Bei derartigen Drosselventilen haben auch der angelegte Versorgungsdruck der Druckluft und der Durchsatz der Druckluft durch das Drosselventil einen Einfluss auf die Kolbenposition. Dies ist insbesondere dann nachteilig, wenn sich der Versorgungsdruck und/oder die Größe der Drosselöffnung ändern.

Darüber hinaus weisen derartige Drosselventile auch eine Hysterese auf, so dass die genaue Kolbenposition nicht nur von dem durch die Spule fließenden Strom, sondern auch von dem Bewegungssinn des Kolbens bestimmt wird.

Die Position des Kolbens eines derartigen Drosselventils wird darüber hinaus auch durch Schwingungen beeinflusst. Daher eignen sich derartige Drosselventile nicht gut dazu, bei Webmaschinen angewandt zu werden, da Webmaschinen durch die Anschlagbewegung des Webblattes und/oder durch Bewegungen der Webrahmen Schwingungen generieren.

Es ist auch ein Drosselventil für Druckluft gemäß Oberbegriff des Anspruchs 1 (US 5060910) mit einem im wesentlichen zylindrischen Ventilsitz und mit einem Kolben, die miteinander einstellbare Drosselspalte bilden, und mit einem elektrischen Antrieb zum Verstellen des Kolbens, der einen Motor enthält. Der Motor ist mittels einer Steuer- oder Regeleinrichtung zum Einstellen von Drosselspalten vorgegebener Größe in vorgegebene Positionen verfahrbar. Der Kolben ist aus Kunststoff, der sich elastisch und gegebenenfalls auch plastisch verformt, wenn er gegen den Ventilsitz anläuft. Mit einem derartigen Drosselventil können vorgegebene Drosselspalten exakt angefahren und auch eingehalten werden, auch wenn das Drosselventil in einer Schwingung generierenden Maschine angeordnet ist. Die Größe des eingestellten Drosselspaltes verändert sich auch nicht in Abhängigkeit von dem Versorgungsdruck der Druckluft und/oder dem Durchsatz der Druckluft. Die Größe der Drosselöffnung und damit der Grad der Drosselung lassen sich somit exakt einstellen. Bei dieser Bauart besteht jedoch ein Problem, nämlich, dass eine Rückmeldung über die jeweilige Position des Kolbens gegeben werden muss. Es müssen Mittel vorhanden sein, die nach einem Unterbrechen der Stromversorgung die Position des Kolbens der Steuer- oder Regeleinheit bei einem Wiedereinschalten melden.

Der Erfindung liegt die Aufgabe zugrunde, ein Drosselventil nach dem Oberbegriff des Anspruches 1 so zu gestalten, dass bei einem Wiedereinschalten der Stromversorgung nach einem Abschalten oder Ausfall der Stromversorgung eine Zuordnung der Position des verstellbaren Kolbens oder des verstellbaren Ventilsitzes durch die Steuer- und/oder Regeleinrichtung möglich ist. Diese Aufgabe wird dadurch gelöst, dass der Kolben zum bilden von Drosselspalten mit wenigstens einem Abschnitt dem Ventilsitz zugewandt ist, dass der Kolben in Abstand zu diesem Abschnitt mit einer Ringschulter versehen ist, deren Durchmesser größer als der Durchmesser des Ventilsitzes ist, und dass die Ringschulter des Kolbens und die Stirnseite des Ventilsitzes, wenn sie gegeneinander anlaufen, eine Bezugsstellung für die Steuer- und/oder Regeleinheit bilden, in welcher eine Weiterbewegung des Rotors des Motors in dieser Richtung blockiert ist.

Aufgrund dieser Gestaltung wird eine Bezugsstellung für die Steuerund/oder Regeleinheit gebildet, die beim Wiedereinschalten nach einem Stromabschalten oder einem Stromausfall angefahren wird und die die Steuer- und/oder Regeleinheit kennt.

In vorteilhafter Ausgestaltung der Erfindung wird vorgesehen, daß der elektrische Antrieb einen Schrittmotor enthält. Mittels eines derartigen Schrittmotores lassen sich die gewünschten Größen des Drosselspaltes sehr exakt anfahren.

Wenn eine besonders feinfühlige Einstellung der Größen des Drosselspaltes gewünscht wird, so wird in weiterer Ausgestaltung der Erfindung vorgesehen, daß zwischen dem Motor und dem von ihm verstellbaren Ventilelement ein Untersetzungsgetriebe angeordnet ist. Damit ist es möglich, insbesondere bei dem Einsatz eines Schrittmotors, die von der Konstruktion des Motors vorgegebenen Winkelbewegungen zwischen den einzelnen Schritten in relativ kleine Verstellwege des oder der Ventilelemente zu untersetzen. Bei einer vorteilhaften Ausgestaltung wird weiter vorgesehen, daß zwischen dem Kolben und dem Motor ein Schraubgetriebe angeordnet ist. Dieses Schraubgetriebe hat den Vorteil, daß es die Drehbewegung des Motors direkt in eine translatorische Bewegung umformt.

In vorteilhafter Anwendung der Erfindung wird das Drosselventil in einer Luftwebmaschine verwendet, wobei das Drosselventil einer Hauptblasdüse vorgeschaltet ist, die mittels wenigstens eines Druckluft mit hohem Druck der Hauptblasdüse zuführenden Hauptventils oder mittels des Druckluft mit niedrigerem Druck der Hauptblasdüse zuführenden Drosselventils mit einer Druckluftquelle verbindbar ist.

Luftwebmaschinen weisen eine oder mehrere Hauptblasdüsen auf, die jeweils einen Schußfaden in ein Webfach eintragen. Diese Hauptblasdüsen werden während des Eintragens eines Schußfadens mit Druckluft mit hohem Druck beaufschlagt, der beispielsweise zwischen 2 bar und 7 bar beträgt. Es ist auch bekannt, die Hauptblasdüse dann, wenn sie gerade keinen Schußfaden einträgt, mit Druckluft mit einem niedrigeren Druck zu beaufschlagen, der beispielsweise 0,02 bar bis 1 bar beträgt. Dieser niedrigere Druck dient dazu, ein Herausfallen des Schußfadens aus der Hauptblasdüse in der Zeit zu verhindern, in der von dieser Hauptblasdüse kein Schußfaden eingetragen wird. Hierzu ist zusätzlich zu einer ersten, ein Hauptventil enthaltenden und zu der oder den Hauptblasdüsen führenden Leitung in einer zweiten zu der oder den Hauptblasdüsen führenden Leitung, die von der gleichen Druckluftquelle ausgeht, ein manuell einstellbarer Druckminderer angeordnet. Der niedrigere Druck ist von dem Weber von Hand in solcher Weise einzustellen, daß der Schußfaden einerseits während des Webvorgangs nicht aus der Hauptblasdüse herausfällt, jedoch andererseits während eines Stillstandes der Webmaschine, beispielsweise zum Beheben eines Schußfadenbruches o.dgl., nicht ausgefasert und zerstört wird. Der niedrigere Druck ist deshalb auch so auszulegen, daß während eines längeren Einwirkens der Druckluft mit dem niedrigeren Druck auf den in der Hauptblasdüse befindlichen Schußfaden dieser nicht zerfasert und zerstört wird. Das Einstellen eines Wertes für den niedrigeren Druck, der beide Bedingungen erfüllt, ist äußerst schwierig. Meistens ist bei der gefundenen Einstellung der eingestellte niedrigere Druck zu gering, um den Schußfaden während des webens sicher in der Hauptblasdüse zu halten, jedoch andererseits so hoch, daß während eines Maschinenstillstandes der Schußfaden zerfasert und zerstört wird.

Es ist auch bekannt, parallel zu der Versorgungsleitung mit dem Druckminderer eine zweite Versorgungsleitung mit einem zweiten Druckminderer vorzusehen. Der eine Druckminderer ist dann auf einen niedrigeren Druck eingestellt, der das Herausfallen des Schußfadens aus der Hauptdüse während des Webvorganges sicher verhindert, während der andere Druckminderer auf einen niedrigeren Druck eingestellt ist, der nicht zu einem Ausfasern oder Zerstören des in der Hauptblasdüse befindlichen Schußfadens während eines Maschinenstillstandes führt. Um diese Funktionen zu erfüllen, müssen in den jeweiligen Zuführleitungen noch Absperrventile angeordnet werden, um die Zuführleitungen jeweils absperren zu können. Darüber hinaus müssen in jeder der Zuführleitungen noch Rückschlagventile angeordnet werden, um zu verhindern, daß bei offenem Hauptventil Druckluft mit dem hohen Druck in diese Zuführleitungen hineingeblasen wird. Diese Lösung erfordert schon für eine Hauptblasdüse einen erheblichen Aufwand und nimmt sehr viel Platz in Anspruch. Für eine Webmaschine mit mehreren Hauptblasdüsen ist diese Lösung nicht mehr praktikabel.

Mit dem erfindungsgemäßen Drosselventil lassen sich diese Probleme in einfacher Weise lösen. Mittels der Steuerund/oder Regeleinheit können Drosselspalte mit vorgegebener Größe angefahren werden, die den jeweiligen Betriebsbedingungen optimal gerecht werden. Es kann eine Größe des Drosselspaltes angefahren werden, die einen Druckwert einstellt, der sicher dafür sorgt, daß der Schußfaden während des Webens in der Hauptblasdüse gehalten wird. Es kann ein weiterer Drosselspalt vorgegebener Größe angefahren und damit ein niedriger Druckwert vorgegeben werden, der bei Maschinenstillstand in der Lage ist, den Schußfaden sicher in der Hauptblasdüse zu halten, ohne ihn jedoch zu zerfasern oder zu zerstören. Darüber hinaus ist es möglich, eine weitere vorgegebene Größe des Drosselspaltes anzufahren, mit der ein Druckwert eingestellt wird, der beispielsweise zwischen den beiden genannten Druckwerten liegt, und der es erlaubt, nach einem Schußfadenbruch o.dgl. einen Schußfaden in die Hauptblasdüse einzusaugen. Schließlich ist es auch möglich, das Drosselventil in eine Absperrstellung zu verfahren.

Weitere Merkmale und Vorteile der Erfindung ergeben sich aus der nachfolgenden Beschreibung der in den Zeichnungen dargestellten Ausführunsgformen und den Unteransprüchen.
- Fig. 1: zeigt einen Axialschnitt durch eine schematische Darstellung eines Drosselventils mit zugehörigem Antrieb,
- Fig. 2: eine Einzelheit F2 der Fig. 1 in größerem Maßstab,
- Fig. 3: einen Schnitt entlang der Linie III-III der Fig. 2,
- Fig. 4: einen Schnitt entsprechend Fig. 2 in einer gegenüber Fig. 2 geänderten Position der Ventilelemente,
- Fig. 5: einen Schnitt entsprechend Fig. 2 und 4 mit einer nochmals anderen Position der Ventilelemente,
- Fig. 6: ein Diagramm zur Darstellung der Drosselfunktion des Drosselventils nach Fig. 1 bis 5 in Abhängigkeit von Positionen der Ventilelemente und
- Fig. 7: eine schematische Darstellung der Druckluftversorgung von zwei Hauptblasdüsen einer Luftwebmaschine, die mit erfindungsgemäßen Drosselventilen ausgerüstet ist.

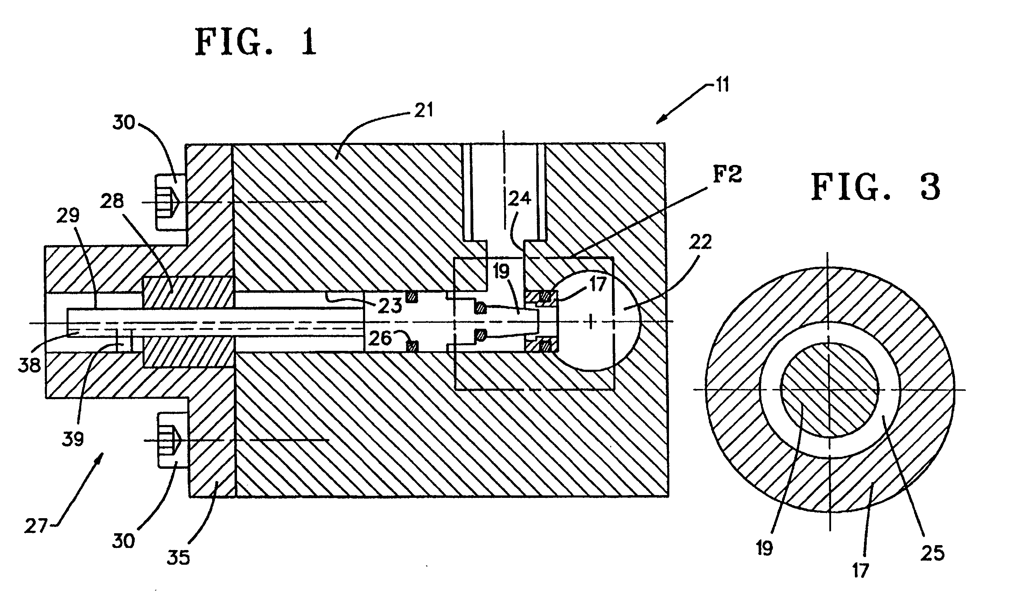

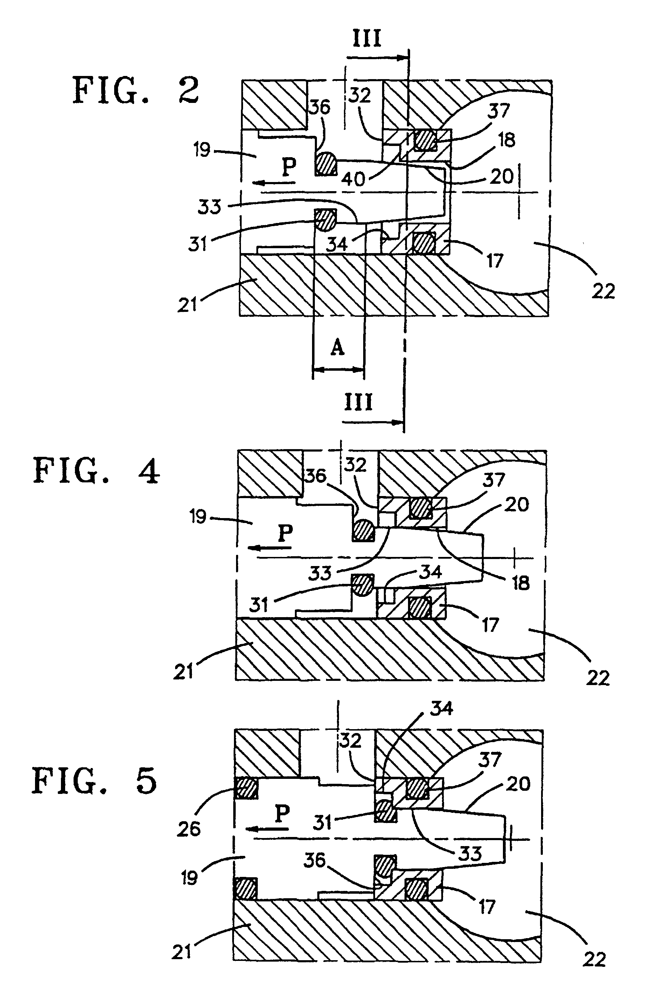

Das in Fig. 1 bis 5 dargestellte Drosselventil (11) enthält zwei Ventilelemente, nämlich einen stationär angeordneten Ventilsitz (17), der eine zylindrische Innenfläche (18) aufweist, und einen verstellbaren Kolben (19), der einen konischen Abschnitt (20) und einen daran anschließenden zylindrischen Abschnitt (33) aufweist. Die Konizität des konischen Abschnittes (20) beträgt zwischen 3° und 30° und insbesondere etwa 5°. Der Durchmesser des zylindrischen Abschnittes (33) des Kolbens ist an den zylindrischen Innendurchmesser (18) des Ventilsitzes (17) derart angepaßt, daß der zylindrische Abschnitt (33) in der in Fig. 4 dargestellten Stellung mit geringem Spiel innerhalb der Innenfläche (18) des Ventilsitzes beweglich ist. Der Ventilsitz (17) ist außerdem mit einer zu seiner Achse konzentrischen Ringnut (34) versehen, die sich auf der dem Kolben (19) zugewandten Stirnseite befindet.

Das Drosselventil (11) weist ein Gehäuse (21) auf, in welchem eine erste Bohrung (22) vorgesehen ist, die in nicht näher dargestellter Weise mit einer Druckluftversorgungseinrichtung in Verbindung steht. Eine zweite Bohrung (23), die quer zu der ersten Bohrung (22) verläuft und mit dieser in Verbindung steht, dient zur Aufnahme des Kolbens (19). Der Ventilsitz (17) ist im Bereich der Verbindungsstelle der Bohrungen (22, 23) angeordnet. Er ist in die Bohrung (23) eingepreßt. Es kann auch eine andere Befestigung vorgesehen werden, beispielsweise ein Kleben. Der Kolben (19) ist in den Ventilsitz (17) axial hineinbeweglich, so daß zwischen der zylindrischen Innenfläche (18) des Ventilsitzes und dem konischen Abschnitt (20) des Kolbens (19) ein Drosselspalt (25) gebildet wird, der in Fig. 3 dargestellt ist. Quer zu der Bohrung (23) ist eine dritte Bohrung (24) derart angeordnet, daß sich der Ventilsitz (17) zwischen der Bohrung (22) und der Bohrung (24) befindet.

Die von einer Druckluftquelle kommende Druckluft wird von der ersten Bohrung (22) durch den Drosselspalt (25), der zwischen der zylindrischen Innenfläche (18) des Ventilsitzes (17) und den konischen Abschnitt (20) des Kolbens (19) gebildet wird, zu der dritten Bohrung (24) geführt. Bei dem Durchgang der Druckluft durch den Drosselspalt (25) erfolgt eine Drosselung. Die von der Druckluftquelle ankommende Druckluft, die durch den beschränkten Drosselspalt (25) strömt, wird somit auf einen niedrigeren Druck gedrosselt, wonach sie mit diesem niedrigeren Druck durch die dritte Bohrung (24) zu einem Verbraucher, beispielsweise einer Hauptblasdüse einer Webmaschine, geführt wird. Der Kolben (19) ist in seinem in der Bohrung (23) geführten Bereich mit einem Dichtungsring (26) versehen, um ein Entweichen von Druckluft aus der Bohrung (23) zu vermeiden.

Der Kolben (19) ist mit Hilfe eines von einer Steuer- oder Regeleinheit gesteuerten Antriebes (27) bewegbar. Der Antrieb (27) enthält einen Schrittmotor mit einem Rotor (28), der mit einem Innengewinde auf einem Außengewinde einer Kolbenstange (29) angeordnet ist. Die Kolbenstange (29) ist mit einer Längsnut (38) versehen, in die ein Stift (39) eingreift, so daß verhindert wird, daß sich die Kolbenstange (29) drehen kann. Der Rotor (28) des Schrittmotors ist axial in dem Gehäuse (35) des Schrittmotors fixiert gelagert, so daß Drehbewegungen des Rotors (28) in Axialbewegungen der Kolbenstange (29) und damit des Kolbens (19) übertragen werden. Das Gehäuse (35) des Schrittmotors ist mittels Schrauben (30) an dem Gehäuse (21) des Drosselventils (11) befestigt.

Der Schrittmotor und das Schraubgetriebe zwischen dem Rotor (28) und der Kolbenstange (29) sind so ausgelegt, daß ein Drehschritt des Schrittmotors in eine Axialbewegung von etwa 0,01 mm bis 0,05 eines Millimeters untersetzt wird, beispielsweise auf 0,03 mm. Hierzu wird der Drehwinkel eines Schrittes des Schrittmotors sowie die Gewindesteigung des Gewindes des Rotors (28) und des Gewindes der Kolbenstange (29) entsprechend ausgelegt. Durch Verdrehen des Rotors (28) wird der Kolben (19) relativ zu dem Ventilsitz bewegt, so daß die Drosselöffnung (25) eingestellt wird. Der Antrieb gestattet es, den Kolben mit Schritten in der Größenordnung von Hundertsteln eines Millimeters relativ zu dem Ventilsitz zu bewegen.

Um das Strömen von Druckluft von der Bohrung (22) zu der Bohrung (24) völlig abzusperren, ist das Drosselventil (11) in eine Absperrstellung verfahrbar. Der Kolben (19) ist mit einem in eine Ringnut angeordneten Dichtring (31) versehen, der mit einer radialen Fläche (40) der Ringnut (34) zusammenarbeitet, wie dies in Fig. 5 dargestellt ist. Bis zu dieser Abdichtwirkung ist der Dichtring (31) innerhalb der Ringnut (34) des Ventilsitzes (17) frei beweglich. In der Absperrstellung liegt ein Ringbund (36) des Kolbens an der Stirnseite (32) des Ventilsitzes (17) an. Diese Stellung ist, wie noch erläutert wird, die Bezugsstellung. Zwischen dem Ventilsitz (17) und der Bohrung (23) ist zusätzlich ein Abdichtring (37) vorgesehen.

Der Dichtring (31) arbeitet mit der radialen Fläche (40) bereits zusammen, bevor der Ringbund (36) des Kolbens (19) sich an die Stirnseite (32) des Ventilsitzes (17) anlegt. Der Außendurchmesser des Dichtrings (31) ist größer als die axiale Tiefe der Ringnut (34). Die Elastizität des Dichtringes (31) gestattet die Bewegung des Kolbens (19) zwischen der Position, in der der Dichtring (31) bereits an der radialen Fläche anliegt, und der Position, in der der Ringbund (36) des Kolbens (19) an der Stirnfläche (32) des Ventilsitzes (17) anliegt.

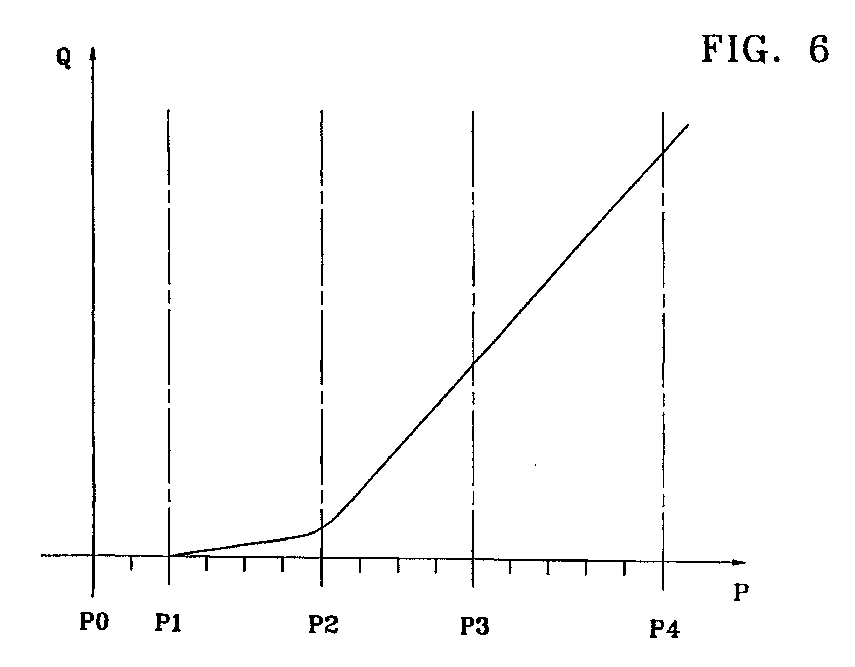

In Fig. 6 ist als Beispiel der Verlauf des Durchsatzes (Q) an Druckluft in Funktion von der Position (P) des Kolbens (19) des Drosselventils (11) dargestellt. Dieser Verlauf wird durch die Form des Kolbens (19) und des Ventilsitzes (17) erhalten, insbesondere durch den Durchmesser der Innenfläche (18) des Ventilsitzes (17) sowie durch den Durchmesser des zylindrischen Abschnittes (33) des Kolbens (19) und die Lage der Ringnut (34), durch die Konizität des Abschnittes (20) des Kolbens sowie durch die in Fig. 2 gezeigte axiale Länge (A) zwischen dem Ringbund (36) und dem konischen Abschnitt (20) des Kolbens (19). In der Position (P0) befindet sich der Kolben (19) in der in Fig. 5 dargestellten Position. Das Drosselventil (11) ist abgesperrt, so daß der Durchsatz (Q) gleich Null ist. Anschließend bewegt sich der Kolben (19) in mehreren Schritten in Richtung (P), wie dies in Fig. 5, 4 und 2 dargestellt ist. Ab der Position (P1), in welcher der Dichtring (31) die zylindrische Fläche (40) der Ringnut (34) verläßt, strömt durch das Drosselventil (11) ein kleiner Luftdurchsatz (Q), der ein sogenannter Leckdurchsatz ist, der durch das Spiel zwischen der Innenfläche (18) des Ventilsitzes (17) und des zylindrischen Abschnittes (33) des Kolbens (19) sowie die axiale Länge, über die die zylindrische Fläche (18) und der zylindrische Abschnitt (33) des Kolbens (19) noch zusammenarbeiten, sowie durch den Abstand zwischen Dichtring (31) und der Ringnut (34) bestimmt wird. Aufgrund der elastischen Verformbarkeit des Dichtringes (31) ist die Position (P1) nicht eindeutig bestimmt. Da jedoch der Leckdurchsatz sehr klein ist, ist das kein besonderer Nachteil.

Anschließend bewegt sich der Kolben (19) weiter in mehreren Schritten in Richtung (P) und erreicht die Position (P2), die in Fig. 4 dargestellt ist. Der zylindrische Abschnitt (33) des Kolbens (19) hat das Ende der zylindrischen Innenfläche (18) des Ventilsitzes (17) erreicht. Bei einer weiteren Veränderung der Position ab dieser Position (P2) wird der Durchsatz (Q) des Drosselventils (11) stärker ansteigen, weil die Innenfläche (18) des Ventilsitzes (17) jetzt mit dem konischen Abschnitt (20) des Kolbens (19) zusammenarbeitet, so daß der Querschnitt des Drosselspaltes (25) vergrößert wird, wodurch die Drosselwirkung verringert wird, d.h. die Druckluft weniger gedrosselt wird. Der Kolben (19) erreicht dananch die Positionen (P3 und P4), die den Darstellungen nach Fig. 2 und 1 entsprechen.

Der Bereich zwischen den Positionen (P2 und P4) des Kolbens (19) des Drosselventils (11) eignet sich in idealer Weise dazu, den Durchsatz (Q) reproduzierbar und sehr genau einzustellen. Der Kolben (19) und der Ventilsitz (17) müssen mit entsprechend geringen Toleranzen hergestellt werden.

Wenn vorgesehen wird, daß der Kolben (19) zwischen seinen Positionen (P0 und P4) beispielsweise 100 Schritte des Schrittmotors eines Antriebes (27) benötigt, so kann der Kolben (19) in eine entsprechend großen Anzahl von Positionen mit unterschiedlich großen Drosselspalten eingestellt werden.

Die Position des Kolbens (19) wird mittels einer Steuerund/oder Regeleinheit für den Schrittmotor bestimmt. Die Steuer- und/oder Regeleinheit, die an eine Spannungsquelle angeschlossen ist, liefert positive oder negative Spannungsimpulse, die an zwei oder mehrere Pole des Schrittmotors angelegt werden.

Um den Antrieb (27) des Drosselventils (11) zu eichen, wird der Schrittmotor von der Steuer- und/oder Regeleinheit mit einer ausreichenden Anzahl von Impulsen versorgt, so daß der Kolben unabhängig von seiner Ausgangsposition entgegen der Richtung (P) zu der in Fig. 6 dargestellten Stellung verfahren wird, in welcher der Ringbund (36) des Kolbens (19) an der Stirnseite (32) des Ventilsitzes (17) anliegt. Nachdem der Kolben (19) diese Position erreicht hat, führen weitere gleichsinnige Impulse nicht mehr zu einem Verdrehen des Rotors (28) in der bisherigen Richtung und somit nicht mehr zu einer Bewegung des Kolbens (19) in Richtung (P). Der Kolben (19) befindet sich dann in der Bezugsstellung (P0).

Durch Vorgeben der Anzahl der Impulse an den Schrittmotor wird dann der Kolben (19) in Richtung (P) um genau definierte axiale Wege bewegt, so daß die Position des Kolbens (19) und damit die Drosselfunktion in Abhängigkeit von dem Abstand zu der Bezugsstellung (P0) bestimmt sind. Die Position des Kolbens (19) ist nicht von dem Druck der Unterdruckquelle, dem Luftwiderstand der einzelnen Elemente und/oder dem Durchsatz von Druckluft abhängig. Ebenso beeinflussen Schwingungen die Position des Kolbens (19) nicht, so daß das Drosselventil (11) unempfindlich gegen Schwingungen ist. Die einzelnen Positionen des Kolbens (19) lassen sich mittels der Steuerund/oder Regeleinheit sehr genau ausgehend von der Bezugsstellung (P0) anfahren, so daß die Drosselfunktion sehr exakt vorgebbar ist.

Es ist ohne weiteres möglich, auch ein Spiel in dem Schraubgetriebe zwischen dem Rotor (28) und der Kolbenstange (29) auszugleichen. Hierzu kann vorgesehen werden, daß die jeweils einzunehmende Position des Kolbens (19) nur in einer Richtung angefahren wird. Soll der Kolben (19) entgegen dieser Richtung (P) eine neue Position anfahren, so wird der Kolben (19) um einige Schritte an der gewünschten Position (P) vorbeigefahren und anschließend in die gewünschte Position entsprechend der festgelegten Anfahrrichtung zurückgefahren. Damit wird sichergestellt, daß ein Spiel des Schraubgetriebes die gewünschte Position des Kolbens (19) nicht beeinflußt.

Bei einem praktischen Beispiel wird vorgesehen, daß zunächst ein Versorgungsdruck der Druckluft, der zwischen 2 bar und 7 bar liegen kann, mittels eines Druckreglers auf einen Druck bis etwa 1000 mbar eingeregelt wird. Der dann an der Bohrung (22) anliegende Druck kann mit Hilfe des erfindungsgemäßen Drosselventils in vorgegebener Weise gedrosselt werden. Der Durchmesser des Kolbens (19) im Bereich seines zylindrischen Abschnittes (33) und der Durchmesser der zylindrischen Innenfläche (18) des Ventilsitzes (17) liegen in der Größenordnung von 3 mm bis 4 mm. Die Konizität des Abschnittes (20) des Kolbens (19) beträgt 5°. Die relative Bewegung zwischen Kolben (19) und Ventilsitz (17) beträgt etwa 4 mm bis 7 mm. Mit einem derartigen Drosselventil ist es möglich, diese axiale Bewegung in beispielsweise 100 Schritten durchzuführen, so daß eine Einstellung der Drosselfunktion in Schritten von beispielsweise 10 mbar möglich ist.

Bei einer abgewandelten Ausführungsform ist der Kolben (19) stationär angeordnet, während der Ventilsitz (17) mit Hilfe eines vorzugsweise ebenfalls ein Schrittmotor enthaltenden Antriebes angetrieben wird. Bei einer weiteren Abwandlung wird vorgesehen, daß sowohl der Kolben (19) als auch der Ventilsitz (17) mit einem eigenen Antrieb versehen sind, um Relativbewegungen zueinander auszuführen.

Das anhand der Fig. 1 bis 6 beschriebene Drosselventil (11) eignet sich in idealer Weise für eine Luftwebmaschine, wobei es entsprechend dem pneumatischen Schaltplan nach Fig. 10 angeordnet wird.

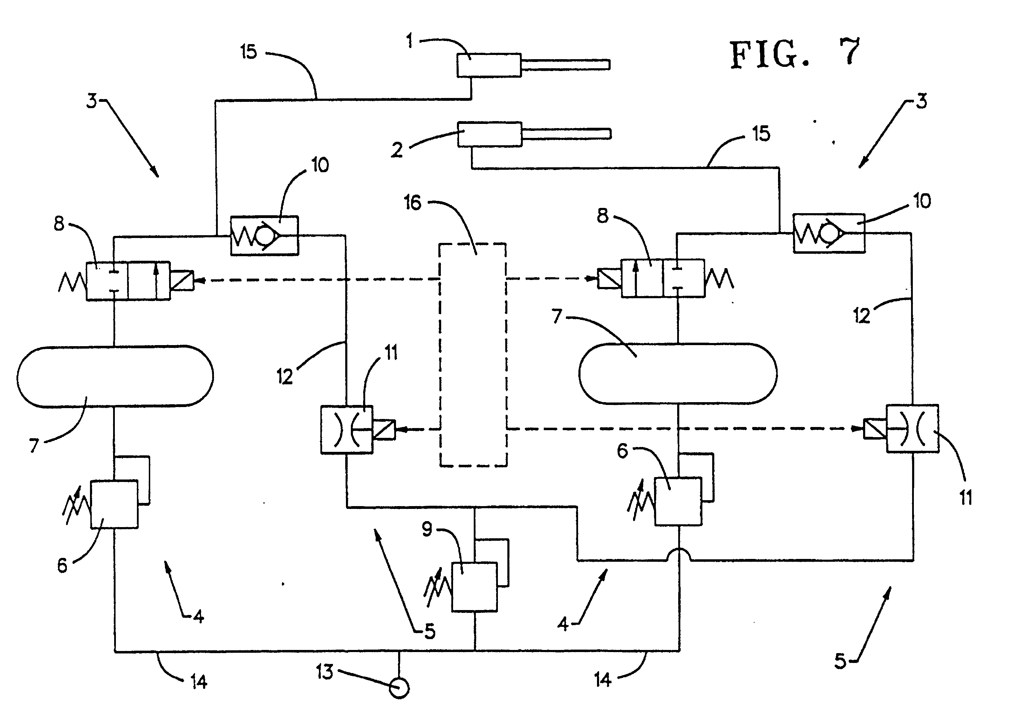

In Fig. 7 sind als Beispiel zwei Hauptblasdüsen (1, 2) einer Luftwebmaschine dargestellt, die in vorgegebenen Sequenzen betätigt werden und dann jeweils einen Schußfaden in ein Webfach eintragen, in welchem der Weitertransport des Schußfadens in bekannter Weise von Stafettendüsen unterstützt wird.

Die Hauptblasdüsen (1, 2) sind jeweils über einen ersten Zweig (4) mit einer Druckluftquelle (13) verbunden. Dieser erste Zweig (4) versorgt die Hauptblasdüsen (1, 2) für das Schußeintragen mit Druckluft mit hohem Druck, der beispielsweise zwischen 2 bar und 7 bar liegen kann. Zwischen der Druckluftquelle (13) und den Hauptblasdüsen (1, 2) ist jeweils ein Druckregler (6), ein Druckspeicher (7) und ein Hauptventil (8) angeordnet. Die Druckregler (6) sind einstellbar. Das Hauptventil (8), das als Magnetventil ausgebildet ist, wird von einer Steuereinheit (16) zum Eintragen eines Schußfadens geöffnet und danach wieder geschlossen.

Die Hauptblasdüsen (1, 2) sind mit der Druckluftquelle (13) jeweils über einen weiteren Zweig (5) verbunden, um die Hauptblasdüsen (1, 2) mit Druckluft mit niedrigerem Druck zu versorgen. Diese beiden Zweige (5) enthalten einen gemeinsamen Druckregler (9), jeweils ein Drosselventil (11) der anhand von Fig. 1 bis 6 beschriebenen Art und ein Rückschlagventil (10), das verhindert, daß der hohe Druck, wenn er von dem Hauptventil (8) freigegeben wird, in diese Zweige (5) einströmt. Die Leitungen (14) der Zweige (4) und die Leitungen (12) der Zweige (5) werden von den Hauptblasdüsen (1, 2) zu jeweils einer Leitung (15) zusammengefaßt.

Das Drosselventil (11) ist mittels der Steuereinrichtung (16) auf unterschiedliche Drosselspalte einstellbar und damit auf unterschiedliche, niedrigere Drücke, mit denen Druckluft zu den Hauptblasdüsen (1, 2) strömt. Grundsätzlich wird der niedrige Druck an das Material des Schußfadens angepaßt, wobei selbstverständlich dann, wenn von den einzelnen Hauptblasdüsen (1, 2) Schußfäden aus unterschiedlichem Material eingetragen werden, an den Hauptblasdüsen (1, 2) entsprechend unterschiedliche Werte für den niedrigeren Druck von der Steuereinrichtung (16) eingestellt werden. Das Drosselventil (11) wird von der Steuereinrichtung (16) so eingestellt, daß es während des Webens in den Schußpausen, d.h. wenn eine der beiden Hauptblasdüsen (1 oder 2) gerade keinen Schußfaden einträgt, diese Hauptblasdüsen (1 oder 2) mit Druckluft mit einem niedrigeren Druck versorgt, der jedoch so hoch ist, daß der betreffende Schußfaden sicher in der Hauptblasdüse gehalten wird. Da erfahrungsgemäß die Gefahr des Herausfallens des Schußfadens aus der Hauptblasdüse (1 oder 2) dann am größten ist, wenn der Schußfaden geschnitten wird, kann die Steuereinrichtung (16) das Drosselventil (11) so einstellen, daß während dieser Zeit Druckluft mit einem höheren Druck geliefert wird, der danach durch Verstellen des Drosselventils (11) reduziert wird. Wenn abhängig von dem Webmuster einer der Schußfäden längere Zeit nicht eingetragen wird, so kann die Steuereinrichtung (16) für diese Zeit einen geringeren niedrigen Druckwert mittels des Drosselventils (11) eingestellt werden, um ein Ausfasern zu verhindern. Dieser Druckwert wird dann von der Steuereinheit (16) rechtzeitig vor dem nächsten·Schußeintrag dieses Schußfadens wieder erhöht. Die Steuereinrichtung (16) stellt das Drosselventil (11) auf einen weiter reduzierten niedrigen Druck ein, wenn ein Maschinenstillstand auftritt, beispielsweise zum Beheben eines Fadenbruches. Die Höhe des Druckes, der dann in die Hauptblasdüsen (1, 2) eingeblasenen Druckluft, wird so festgelegt, daß die betreffenden Schußfäden sicher gehalten jedoch auch bei einem längeren Einwirken dieser Druckluft nicht zerfasert und zerstört werden. Darüber hinaus stellt die Steuereinrichtung (16) das Drosselventil (11) auf einen Druckwert ein, der es ermöglicht, am Eingang der Hauptblasdüse (1 oder 2) einen Schußfaden anzusaugen und einzuführen. Dieser Wert kann niedriger sein als der während des Webens zum Halten des Schußfadens den Hauptblasdüsen (1, 2) zugeführte Wert, jedoch größer als der bei einer Betriebsunterbrechung den Hauptblasdüsen (1, 2) zugeführte Wert. Darüber hinaus ist die Steuereinheit (16) in der Lage, das Drosselventil (11) vollständig abzusperren, was für bestimmte Betriebszustände von Vorteil ist. Außerdem kann dann unter Umständen das Rückschlagventil (10) vollständig entfallen.

Bei einer abgewandelten Ausführungsform wird vorgesehen, daß in den Leitungen (12) nach dem jeweiligen Drosselventil ein Druckgeber angeordnet wird, der mit der Steuereinrichtung (16) verbunden ist, die einen Regelkreis enthält. Dadurch ist es möglich, mit der dann eine Steuer- und Regeleinrichtung (16) darstellenden Einrichtung den gewünschten Druckwert exakt einzuregeln und einzuhalten. In diesem Falle könnte auch dann der Druckregler (9) vor den Drosselventilen (11) entfallen.

Die Erfindung ist nicht auf die dargestellten und beschriebenen Ausführungsbeispiele beschränkt, die nur zur Erläuterung dienen. Äquivalente Ausbildungen, insbesondere des Antriebes (27) und/oder der Ventilelemente (17, 19), liegen im Bereich des fachmännischen Könnens.

Beispielsweise ist es möglich, relativ zueinander verdrehbare Ventilelemente vorzusehen, die einen Drosselspalt bilden. Es können zwei ineinandergesteckte zylindrische, gegeneinander verdrehbare Ventilelemente vorgesehen werden, die mit Querbohrungen versehen sind, welche durch das Verdrehen mehr oder weniger in Übereinstimmung gebracht werden, so daß sich ein entsprechend größerer oder kleinerer Drosselspalt und auch eine Absperrstellung einstellen lassen. In diesem Fall wird eines oder beide der Ventilelemente mittels des Antriebes verdreht, der einen Schrittmotor und vorzugsweise auch ein Untersetzungsgetriebe enthält.

Das in Fig. 7 dargestellte Hauptventil (8) und das Drosselventil (11) können in einer praktischen Konstruktion in einem gemeinsamen Gehäuse untergebracht sein, das gegebenenfalls auch das Rückschlagventil (10) enthält, sofern dies überhaupt vorgesehen wird.

## Patentansprüche

1. Drosselventil (11) für Druckluft oder dergleichen mit einem im wesentlichen zylindrischen Ventilsitz (17) und mit einem Kolben (19), die miteinander einstellbare Drosselspalte (25) bilden, und mit einem elektrischen Antrieb (27) zum Verstellen von Ventilsitz und/oder Kolben, der einen Motor enthält, der mittels einer Steuer- und/oder Regeleinheit (16) zum Einstellen von Drosselspalten (25) vorgegebener Größe in vorgegebene Positionen (P) verfahrbar ist,
**dadurch gekennzeichnet, daß**
der Kolben (19) zum Bilden von Drosselspalten (25) mit wenigstens einem Abschnitt (20, 33) dem Ventilsitz (17) zugewandt ist, und dass der Kolben in Abstand zu diesem Abschnitt mit einer Ringschulter (36) versehen ist, deren Durchmesser größer als der Durchmesser des Ventilsitzes (17) ist, und dass die Ringschulter (36) des Kolbens (19) und die Stirnseite des Ventilsitzes (17), wenn sie gegeneinander anlaufen, eine Bezugsstellung (PO) für die Steuer- und/oder Regeleinheit (16) bilden, in welcher eine Weiterbewegung des Rotors (28) des Motors in dieser Richtung blockiert ist.

2. Drosselventil nach Anspruch 1, **dadurch gekennzeichnet, daß** der elektrische Antrieb (27) einen Schrittmotor enthält.

3. Drosselventil nach Anspruch 1 oder 2, **dadurch gekennzeichnet, daß** zwischem dem Motor und dem von ihm verstellbaren Ventilelement (19) ein Untersetzungsgetriebe (28, 29) angeordnet ist.

4. Drosselventil nach Anspruch 1, **dadurch gekennzeichnet, daß** zwischen dem Kolben (19) und dem Motor ein Schraubgetriebe (28, 29) angeordnet ist.

5. Drosselventil nach Anspruch 1, **dadurch gekennzeichnet, daß** der Kolben (19) mit einem sich in der Schließsstellung an den Ventilsitz (17) anlegenden elastischen Dichtungsring (31) versehen ist.

6. Drosselventil nach einem der Ansprüche 1 bis 5, **dadurch gekennzeichnet, daß** das Drosselventil (11) in einer Luftwebmaschine verwendet wird, wobei das Drosselventil (11) einer Hauptblasdüse (1, 2) vorgeschaltet ist, die mittels eines Druckluft mit hohem Druck der Hauptblasdüse (1, 2) zuführenden Hauptventils (8) oder mittels des Druckluft mit niedrigerem Druck der Hauptblasdüse (1, 2) zuführenden Drosselventils (11) mit einer Druckluftquelle (13) verbindbar ist.

7. Drosselventil nach Anspruch 6, **dadurch gekennzeichnet, daß** der Motor (27, 28) mit einer Steuereinheit (16) verbunden ist, die unterschiedliche Drosselspalte nach einem Programm auswählt und anfährt.

8. Drosselventil nach Anspruch 6, **dadurch gekennzeichnet, daß** dem Motor (27, 28) eine Regeleinrichtung zugeordnet ist, die mit einem den gedrosselten Druck erfassenden Drucksensor verbunden ist und den gedrosselten Druck auf vorbestimmte, unterschiedlichen Betriebsbedingungen zugeordnete Druckwerte einregelt.

9. Drosselventil nach einem der Ansprüche 1 bis 5, **dadurch gekennzeichnet, dass** der Kolben (19) ein kegelstumpfförmiges Ende (30) und einen daran anschließenden zylindrischen Abschnitt (33) aufweist, und dass der zylindrische Abschnitt (33) an der Ringschulter (36) endet.

10. Verfahren zum Eichen eines Drosselventils (11) nach Anspruch 1 für Druckluft oder dergleichen, das einen im wesentlichen zylindrischen Ventilsitz (17) und ein Kolben (19) aufweist, die miteinander einstellbare Drosselspalte (25) bilden, und einen elektrischen Antrieb (27) zum Verstellen von Ventilsitz und/oder Kolben aufweist, der einen Motor enthält, der mittels einer Steuer- und/oder Regeleinheit (16) zum Einstellen von Drosselspalten (25) vorgegebener Größe in vorgegebene Positionen (P) verfahrbar ist, **dadurch gekennzeichnet, dass** der Kolben (19), der zum Bilden von Drosselspalten (25) mit wenigstens einem Abschnitt (20, 33) dem Ventilsitz (17) zugewandt ist, mit einer Ringschulter (36), deren Durchmesser größer als der Durchmesser des Ventilsitzes (17) ist, zum Bilden einer Bezugsstellung (PO) für die Steuer- und/oder Regeleinheit (16) an eine Stirnseite (32) des Ventilsitzes (17) zur Anlage gebracht wird, in welcher eine Weiterbewegung des Rotors (28) des Motors in dieser Richtung blockiert ist.

## Claims

1. Throttle valve (11) for compressed air or similar with an essentially cylindrical valve seat (17) and with a piston (19), which together form an adjustable throttle aperture (25), and with an electric drive (27) to adjust the valve seat and/or piston, which contain(s) a motor that may be driven by means of a control unit (16) for setting throttle apertures (25) of a predetermined size in predetermined positions (P),
**characterised in that**
at least one section (20, 33) of the piston (19) is turned towards the valve seat (17) to form throttle apertures (25) and that the piston is provided with a ring shoulder (36) at a distance from this section, the diameter of which is larger than the diameter of the valve seat (17) and that, when they move against each other, the ring shoulder (36) of the piston (19) and the front side of the valve seat (17) form a reference point (PO) for the control unit (16) in which further movement of the rotor (28) of the motor in this direction is blocked.

2. Throttle valve according to claim 1, **characterised in that** the electric drive (27) contains a stepper motor.

3. Throttle valve according to claim 1 or 2, **characterised in that** a reduction gear (28, 29) is positioned between the motor and the adjustable valve element (19).

4. Throttle valve according to claim 1, **characterised in that** a helical gear (28, 29) is positioned between the piston (19) and the motor.

5. Throttle valve according to claim 1, **characterised in that** the piston (19) is provided with an elastic sealing ring (31) which is in contact with the valve seat (17) in the closing position.

6. Throttle valve according to one of claims 1 to 5, **characterised in that** the throttle valve (11) is used in an air loom, wherein the throttle valve (11) is upstream from a main nozzle (1, 2), which may be connected with a compressed air source (13) by means of a main valve (8) supplying the compressed a ir w ith the h igh pressure to the main nozzle (1, 2) or by means of the throttle valve (11) supplying the compressed air with the lower pressure to the main nozzle (1, 2).

7. Throttle valve according to claim 6, **characterised in that** the motor (27, 28) is connected to a control unit (16), which selects and activates various throttle apertures according to a program.

8. Throttle valve according to claim 6, **characterised in that** a control unit is assigned to the motor (27, 28), which is connected to a pressure sensor that records the throttled pressure and adjusts the throttled pressure to various predetermined pressure values assigned to environmental conditions.

9. Throttle valve according to one of claims 1 to 5, **characterised in that** the piston (19) has one end in the form of a truncated cone (30) with a connecting cylindrical section (33) and that the cylindrical section (33) ends at the ring shoulder (36).

10. Process to calibrate a throttle valve (11) according to claim 1 for compressed air or similar, which essentially has a cylindrical valve seat (17) and a piston (19) that together form an adjustable throttle aperture (25), and which has an electric drive (27) for adjusting the valve seat and/or piston that contains a motor that may be driven by means of a control unit (16) to set throttle apertures (25) of a predetermined size in predetermined positions (P), **characterised in that** the piston (19), which has at least one section (20, 33) turned towards the valve seat (17) to form throttle apertures (25), is provided with a ring shoulder (36), the diameter of which is larger than the diameter of the valve seat (17), which is in contact with the front side (32) of the valve seat (17) to form a reference position (PO) for the control unit (16) in which further movement of the rotor (26) in this direction is blocked.

## Revendications

1. Soupape d'étranglement (11) pour de l'air comprimé ou analogue avec un siège de soupape sensiblement cylindrique (17) et un piston (19), qui forment ensemble des fentes d'étranglement ajustables (25), et avec un entraînement électrique (27) pour déplacer le siège de soupape et/ou le piston, qui comporte un moteur qui est déplaçable au moyen d'une unité de commande et/ou de réglage (16) pour l'ajustement de fentes d'étranglement (25) d'une grandeur prédéterminée dans des positions prédéterminées (P), **caractérisée en ce que** le piston (19) pour la formation des fentes d'étranglement (25), est orienté avec au moins un tronçon (20, 33) vers le siège de soupape (17), et **en ce que** le piston, à une distance de ce tronçon, est pourvu d'un épaulement annulaire (36)dont le diamètre est plus grand que le diamètre du siège de soupape (17), et **en ce que** l'épaulement annulaire (36) du piston (19) et le côté frontal du siège de soupape (17), lorsqu'ils viennent l'un contre l'autre, forment une position de référence (PO) pour l'unité de commande et/ou de réglage (16) dans laquelle un mouvement ultérieur du rotor (28) du moteur est bloqué dans cette direction.

2. Soupape d'étranglement selon la revendication 1, **caractérisée en ce que** l'entraînement électrique (27) comporte un moteur pas-à-pas.

3. Soupape d'étranglement selon la revendication 1 ou 2, **caractérisée en ce qu'**il est disposé entre le moteur et l'élément de soupape (19) déplaçable par celui-ci un démultiplicateur (28, 29).

4. Soupape d'étranglement selon la revendication 1, **caractérisée en ce qu'**il est disposé entre le piston (19) et le moteur un mouvement à vis (28, 29).

5. Soupape d'étranglement selon la revendication 1, **caractérisée en ce que** le piston (19) est pourvu d'une bague d'étanchéité élastique (31) s'appliquant en position de fermeture au siège de soupape (17).

6. Soupape d'étranglement selon l'une des revendications 1 à 5, **caractérisée en ce que** la soupape d'étranglement (11) est utilisée dans une machine à tisser à jet d'air, où la soupape d'étranglement (11) est disposée en amont d'une buse de soufflage principale (1, 2) qui peut être reliée au moyen d'une soupape principale (8) amenant de l'air comprimé sous pression élevée à la buse de soufflage principale (1, 2) ou au moyen de la soupape d'étranglement (11) amenant de l'air comprimé à une pression plus basse à la buse de soufflage principale (1, 2) à une source d'air comprimé (13).

7. Soupape d'étranglement selon la revendication 6, **caractérisée en ce que** le moteur (27, 28) est relié à une unité de commande (16) qui sélectionne et aborde des fentes d'étranglement différentes selon un programme.

8. Soupape d'étranglement selon la revendication 6, **caractérisée en ce qu'**il est associé au moteur (27, 28) une installation de réglage qui est reliée à un capteur de pression détectant la pression d'étranglement et qui règle la pression d'étranglement à des valeurs de pression prédéfinies, associées à des conditions de fonctionnement différentes.

9. Soupape d'étranglement selon l'une des revendications 1 à 5, **caractérisée en ce que** le piston (19) présente une extrémité tronconique (30) et un tronçon cylindrique (33) faisant suite à celle-ci, et **en ce que** le tronçon cylindrique (33) se termine à l'épaulement annulaire (36).

10. Procédé pour le calibrage de la soupape d'étranglement (11) selon la revendication 1 pour de l'air comprimé ou analogue, qui présente un siège de soupape sensiblement cylindrique (17) et un piston (19), qui forment conjointement des fentes d'étranglement ajustables (25) et qui comporte un entraînement électrique (27) pour déplacer le siège de soupape et/ou le piston, qui contient un moteur qui est déplaçable au moyen d'une unité de commande et/ou de réglage (16), pour le réglage de fentes d'étranglement (25) d'une grandeur prédéterminée, dans des positions prédéterminées (P), **caractérisé en ce que** le piston (19) qui, pour former des fentes d'étranglement (25), est orienté avec au moins un tronçon (20, 33) vers le siège de soupape (17), est amené à s'appliquer au moyen d'un épaulement annulaire (36) dont le diamètre est plus grand que le diamètre du siège de soupape (17), pour former une position de référence (PO) pour l'unité de commande et/ou de réglage (16), à un côté frontal (32) du siège de soupape (17), dans laquelle un mouvement ultérieur du rotor (28) du moteur est bloqué dans cette direction.
